# FASCICULE DE BREVET EUROPEEN

(11) **EP 2 070 750 B1**
(45) Date de publication et mention de la délivrance du brevet: **02.11.2011**
(21) Numéro de dépôt: 08170630.1
(22) Date de dépôt: 03.12.2008
(51) Int. Cl.: B60J 5/06, B62D 65/06

(54) **Procédé de montage d'un ouvrant lateral coulissant d'un véhicule automobile permettant d'ajuster les positions relatives des eléments assurant le coulissement et le maintien de l'ouvrant a une position de fermeture**
Montageverfahren eines seitlichen Schiebeöffnungselements eines Kraftfahrzeugs, das eine Feineinstellung der relativen Positionen der Elemente erlaubt, die wiederum ein korrektes Schieben und die Aufrechterhaltung des Öffnungselements in geschlossener Position gewährleistet
Method of installing a sliding side door of an automobile making it possible to adjust the relative positions of the elements that provide the sliding and hold the door in a closed position

(30) Priorité: 11.12.2007 FR 0759754
(43) Date de publication de la demande: 17.06.2009
(73) Titulaire: Peugeot Citroën Automobiles SA, 78943 Vélizy-Villacoublay Cedex (FR)
(72) Inventeur: Demougin, Luc, 92310 Sèvres (FR)
(74) Mandataire: Fernandez, Francis Lionel

(56) Documents cités:
- JP-A- 6 092 276
- JP-A- 2004 175 241
- JP-A- 2004 196 124

## Description

La présente invention concerne un procédé de montage d'un ouvrant latéral coulissant d'un véhicule automobile, permettant d'ajuster les positions relatives des éléments assurant le coulissement de l'ouvrant et des éléments assurant une liaison entre l'ouvrant et la caisse du véhicule dans une position de fermeture de l'ouvrant.

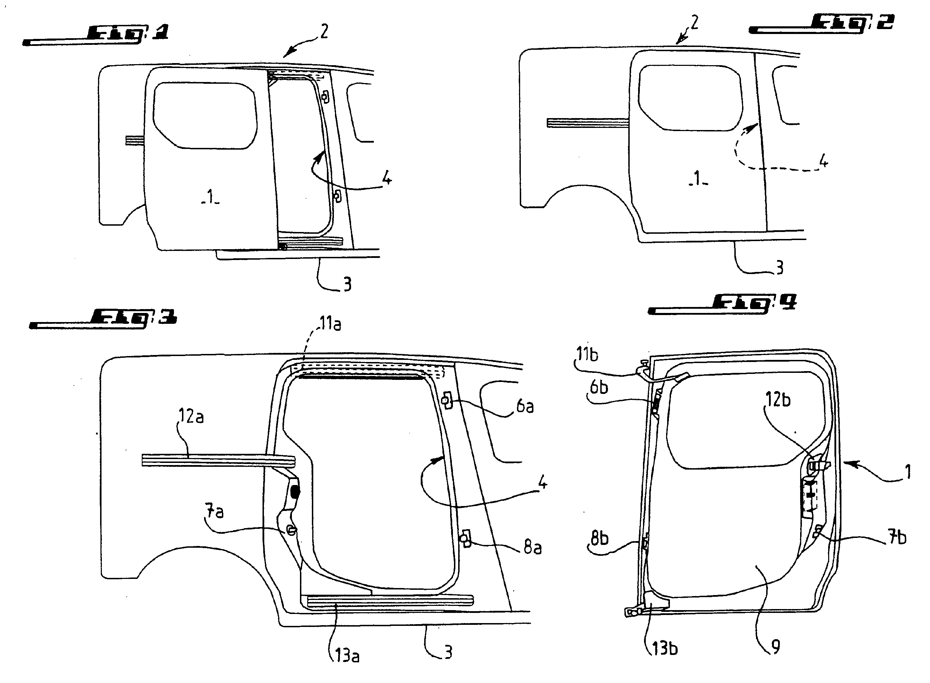

Comme l'illustrent les figures 1 et 2, un ouvrant latéral 1 d'un véhicule 2 est monté à coulissement par rapport à la caisse 3 de ce véhicule 2 entre une position de fermeture d'un encadrement 4 formé au sein de la caisse du véhicule et une position d'ouverture, dans laquelle l'ouvrant 1 laisse un libre accès à cet encadrement 4.

Lorsqu'il occupe la position de fermeture de la figure 2, l'ouvrant latéral 1 du véhicule est supporté par des éléments complémentaires centreurs 6a, 7a, 8a et guides 6b, 7b, 8b, visibles sur les figures 3 et 4. Les centreurs sont fixés sur le contour de l'encadrement 4, les guides 6b, 7b, 8b comprenant des logements d'accueil des centreurs 6a, 7a, 8a sont disposés sur la face interne 9 de l'ouvrant 1 en des positions permettant l'engagement de chaque centreur 6a, 7a, 8a au sein des logements des guides complémentaires 6b, 7b, 8b.

Dans cette position de fermeture, les couples centreur/guide maintiennent l'ouvrant 1 lié à la caisse du véhicule avec un jeu mécanique très faible, rendu pratiquement nul par l'action des joints d'étanchéité (non représentés) venant à être interposés entre l'ouvrant 1 et l'encadrement 4.

Ce positionnement de l'ouvrant par les couples centreurs/guide vis-à-vis de la caisse 3, avec un jeu mécanique très faible, permet de satisfaire à des exigences stylistiques et sonores.

Par ailleurs, lorsqu'il coulisse le long de la caisse 3 du véhicule, l'ouvrant 1 est supporté par des éléments complémentaires rails 11a, 12a, 13a et chariots 11b, 12b, 13b avec un jeu mécanique relativement important afin de faciliter les mouvements de l'ouvrant 1.

L'ouvrant 1 coulisse ainsi entre la position d'ouverture de la figure 1 et une position de pré-fermeture dans laquelle il est disposé au niveau de l'encadrement 4 du véhicule, les chariots 11b, 12b, 13b étant situés à l'extrémité avant du rail 11a, 12a, 13a sans que les guides 6b, 7b, 8b et les centreurs 6a, 7a, 8a ne soient engagés les uns dans les autres.

Dans cette position de pré-fermeture, les couples rail/chariot maintiennent l'ouvrant 1 avec un jeu mécanique toujours important mais lorsque l'ouvrant 1 est déplacé à sa position de fermeture, les guides 6b, 7b, 8b et les centreurs 6a, 7a, 8a s'engagent les uns dans les autres et lient l'ouvrant 1 à la caisse 3 avec un jeu mécanique faible.

Ainsi, lors du passage de l'ouvrant 1 de sa position de pré-fermeture à sa position de fermeture, les éléments qui assurent son support sont successivement les couples rail/chariot avec jeu mécanique important et les couples centreur/guide presque sans jeu mécanique.

Il est donc important de faciliter le changement de support de l'ouvrant 1 entre la position de pré-fermeture et la position de fermeture.

Il convient donc de réduire les écarts géométriques entre les différents couples, car ces écarts sont à l'origine de défauts parmi lesquels la dureté de fermeture de l'ouvrant, la déformation de sa géométrie, le bruit.

Plus précisément, pour assurer l'ajustement le plus précis possible entre les positions relatives des couples chariot/rail par rapport à celles des couples guide/centreur, il faut non seulement maîtriser la géométrie des éléments pris individuellement (centreurs, guides, chariots et rails de coulissement), mais également réduire le plus possible les écarts en position (appelés également dispersion de positionnement) des trous d'indexage des centreurs 6a, 7a, 8a et des rails 11a, 12a, 13a du côté de la caisse 3 d'une part, et de l'autre part, du côté de l'ouvrant 1, la dispersion de positionnement entre les trous d'indexage et les surfaces de contact des guides centreurs 6b, 7b & 8b et des chariots 11b, 12b, 13b. Les diverses exigences stylistiques ainsi que les faisabilités techniques ne permettent pas toujours une optimisation suffisante pour garantir cette bonne maîtrise.

Pour ce faire, les solutions existantes préconisent d'ajuster les positions relatives des couples chariot/rail par rapport à celles des couples guide/centreur.

L'une d'elle consiste à piloter la position de chaque élément des couples rail/chariot et des couples centreur/guide (7).

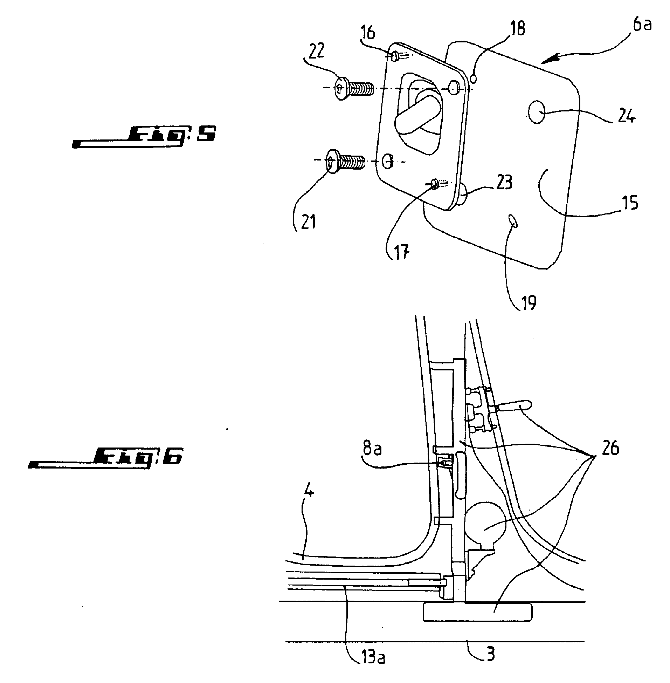

La figure 5 illustre un exemple de pilotage de la position de l'un des centreurs 6a, 7a, 8a par rapport à une embase 15 fixée sur la caisse 3 du véhicule. La position de ce centreur est maintenue grâce aux deux pions d'indexage 16 et 17 qui coopèrent respectivement avec le trou 18 et la lumière oblongue 19 d'indexage. Le centreur est ensuite fixé dans sa position par engagement des vis 21, 22 dans les écrous 23, 24 formés au sein de l'embase 15. Le plaquage et le vissage du centreur par rapport à la caisse assurent le blocage de trois degrés de liberté des pièces l'une par rapport à l'autre. Les trois autres degrés de liberté sont figés à l'aide des pions d'indexage.

Cette solution est basée sur la prise en compte des dispersions de position existant entre les trous d'indexage du rail de guidage et ceux du centreur et des problématiques liées à la conception de ces éléments.

Elle est donc contraignante.

L'autre solution représentée sur la figure 6 consiste à positionner autour de l'encadrement 4 l'un des éléments du couple rail/chariot par rapport à l'un des éléments du couple centreur/guide à l'aide d'un gabarit 26. Plus précisément, dans l'exemple représenté, le rail de guidage inférieur 13a est positionné à l'aide d'un gabarit 26 par rapport au centreur inférieur 8a. Ainsi la position du rail de guidage 13a relativement au centreur 8a est définie avec précision par une côte prédéterminée grâce au gabarit.

Cette solution présente des risques de détérioration d'aspect sur le coté de caisse du véhicule par la présence du gabarit, de surplus pondéral du fait de la nécessaire robustesse du gabarit, qui nuit en outre à l'ergonomie de l'ensemble.

Le document JP 2004 175241 montre un procédé de montage d'un ouvrant coulissant ainsi qu'un dispositif d'ajustement en position d'un élément de coulissement d'un ouvrant correspondant tels que décrit respectivement par le préambule des revendications 1 et 9.

L'invention se propose de pallier ces inconvénients.

A cet effet, l'invention concerne un procédé de montage d'un ouvrant coulissant apte à obturer un encadrement, permettant d'ajuster les positions relatives des éléments de coulissement de l'ouvrant et des éléments de liaison de l'ouvrant dans une position de fermeture de l'encadrement, les éléments de coulissement comprenant un rail et un chariot associé avec lesquels l'ouvrant coulisse avec un jeu mécanique non nul, les éléments de liaison de l'ouvrant maintenant l'ouvrant en position de fermeture avec un jeu mécanique faible.

Selon l'invention, le procédé comprend au moins les étapes de :
- fixation partielle d'au moins un des éléments de coulissement (13a), une partie de cet élément pouvant se mouvoir jusqu'à une position ajustée,
- fixation complète des autres éléments (11a, 11b, 12a, 12b, 13b, 6a, 6b, 7a, 7b, 8a, 8b),
- montage de l'ouvrant (1) sur la caisse du véhicule à sa position de fermeture, par l'élément partiellement fixé (13a) et les éléments complètement fixés (11a, 11b, 12a, 12b, 13b, 6a, 6b, 7a, 7b, 8a, 8b), le chariot (13b) étant engagé dans le rail (13a),
- déplacement de la partie mobile de l'élément partiellement fixé jusqu'à la position ajustée,
- fixation de la partie mobile (31) de l'élément partiellement fixé (13a) dans la position ajustée.

Selon une autre caractéristique, l'élément partiellement fixé est le rail de coulissement (13a) de l'ouvrant dont l'extrémité (31) la plus proche du guide associé (8b) est la partie pouvant se mouvoir à la position ajustée.

Avantageusement, l'élément partiellement fixé est un rail inférieur de coulissement de l'ouvrant.

De préférence, le déplacement de l'extrémité mobile du rail est effectué par rapprochement ou éloignement de cette extrémité relativement à un élément solidaire de l'encadrement.

Plus précisément, le déplacement de la partie mobile à la position ajustée est effectué au moyen d'un système vis-écrou, l'écrou étant solidaire de l'extrémité du rail et la vis traversant le boîtier, l'extrémité du rail et l'écrou.

Selon un autre mode de réalisation, le déplacement de l'extrémité mobile du rail est effectué au moyen d'un outil spécifique pourvu d'une partie mobile sur le chemin de déplacement de l'extrémité mobile du rail jusqu'à la position ajustée, l'outil spécifique étant dégagé de son emplacement une fois l'extrémité mobile fixée à sa position ajustée.

Dans ce cas, l'outil spécifique est muni d'un organe élastique tel qu'un ressort apte à être interposé entre l'extrémité mobile du rail et une partie fixe du véhicule telle que le plancher.

Selon une variante, l'outil spécifique est muni d'un vérin apte à être interposé entre l'extrémité mobile du rail et une partie fixe du véhicule telle que le plancher.

L'invention concerne également un dispositif apte à obturer un encadrement, l'ouvrant coulissant avec un jeu mécanique non nul au moyen d'éléments de coulissement comprenant un rail de guidage et un chariot associé qui supportent le poids de l'ouvrant durant son coulissement, le chariot étant déformable sous le poids de l'ouvrant, et étant lié à l'encadrement dans la position de fermeture, sans jeu mécanique, par des éléments de liaison, le chariot n'étant alors pas forcément en appui contre la bande de roulement du rail.

Selon l'invention, ce dispositif comprend :
- des moyens (30) de fixation partielle du rail à la caisse du véhicule, ces moyens étant aptes à maintenir une extrémité du rail (31) à une position non ajustée et laissant cette extrémité déplaçable jusqu'à une position ajustée, à laquelle, dans la position de fermeture de l'ouvrant, le chariot est en appui contre la bande de roulement du rail et le chariot est déformé comme il l'est lorsque l'ouvrant coulisse,
- un système de déplacement (33) de l'extrémité mobile (31) du rail depuis la position non ajustée jusqu'à la position ajustée,
- un moyen de fixation (30) de l'extrémité mobile du rail à la position ajustée.

Avantageusement, le dispositif comprend un boîtier d'accueil du rail destiné à être solidaire de l'encadrement, le système de déplacement assurant un rapprochement ou un éloignement de l'extrémité mobile du rail relativement au boîtier.

De préférence, le système de déplacement est du type vis-écrou, l'écrou étant solidaire de l'extrémité du rail et la vis traversant le boîtier, l'extrémité du rail et l'écrou.

Selon une variante, le dispositif comprend un outil spécifique pourvu d'une partie mobile sur le chemin de déplacement de l'extrémité mobile entre la position non ajustée et la position ajustée, l'outil spécifique étant apte à être dégagé de son emplacement une fois l'extrémité mobile du rail fixée à sa position ajustée.

Dans ce cas, l'outil spécifique est muni d'un vérin ou d'un organe élastique tel qu'un ressort.

Selon le mode de réalisation préféré, l'ouvrant est un ouvrant latéral d'un véhicule automobile et l'encadrement qu'il obture est un encadrement formé dans la caisse du véhicule.

D'autres buts, avantages et caractéristiques de l'invention apparaîtront dans la description qui suit de plusieurs modes de réalisation de l'invention, non limitatifs de l'objet et de la portée de la présente demande de brevet, accompagnée de dessins dans lesquels :
- la figure 1 précitée est une vue partielle de côté d'un véhicule automobile à ouvrant latéral coulissant en position ouverte,
- la figure 2 est une vue analogue à la figure 1 mais montrant l'ouvrant latéral en position fermée,
- la figure 3 représente, une vue conforme à la figure 1 dans laquelle l'ouvrant latéral a été ôté,
- la figure 4 illustre une vue de la face interne de l'ouvrant de la figure 1,
- la figure 5 montre une solution connue de l'art antérieur pour réduire les écarts géométriques entre les éléments assurant le coulissement de l'ouvrant et les éléments assurant la liaison de cet ouvrant avec la caisse du véhicule lorsque l'ouvrant occupe la position de fermeture,
- la figure 6 représente une deuxième solution connue de l'art antérieur,

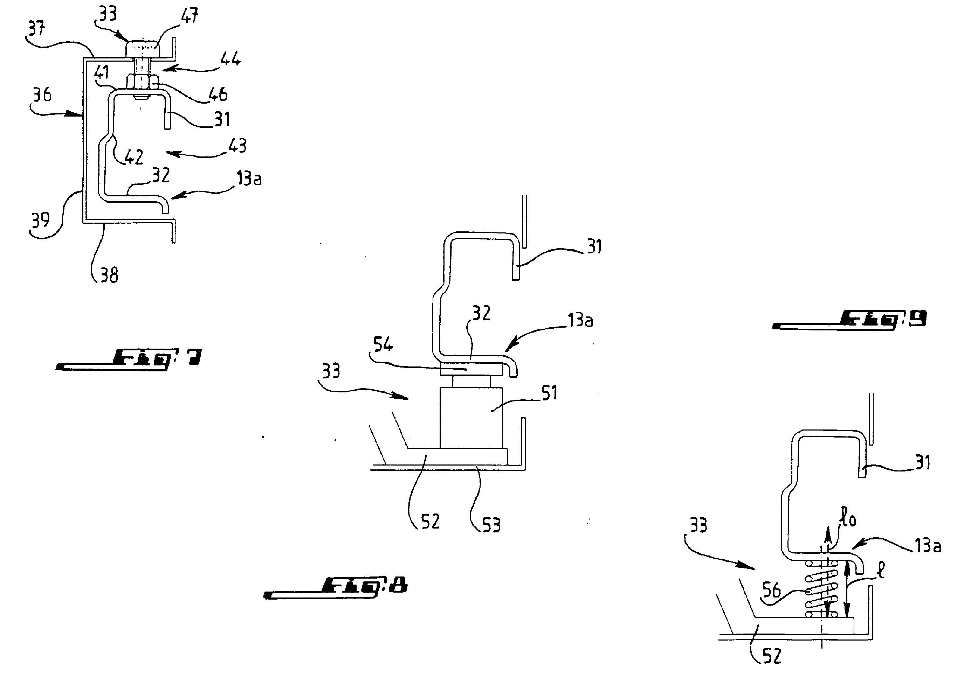

- la figure 7 illustre un premier mode de réalisation du système d'ajustement de la position de l'extrémité du rail selon l'invention,
- la figure 8 montre un second mode de réalisation du système de la figure 7,
- la figure 9 montre un troisième mode de réalisation du système de la figure 7,

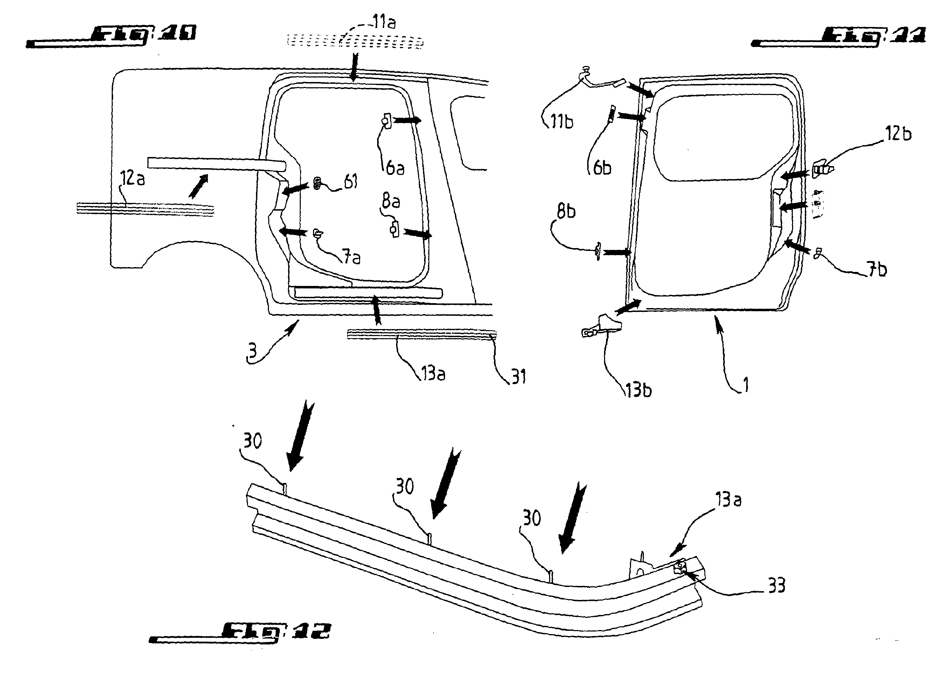

- les figures 10 et 11 montrent les première et deuxième étapes du procédé de montage selon l'invention,
- la figure 12 est une vue en perspective donnant le détail de la fixation du rail de coulissement selon le procédé de l'invention,

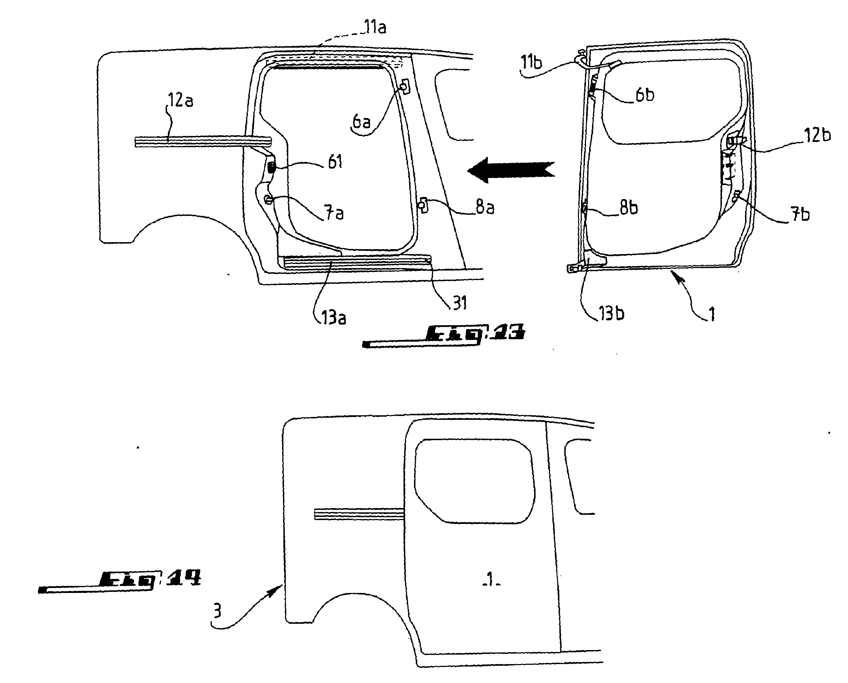

- la figure 13 illustre une troisième étape du procédé,
- la figure 14 montre une quatrième étape de ce procédé,

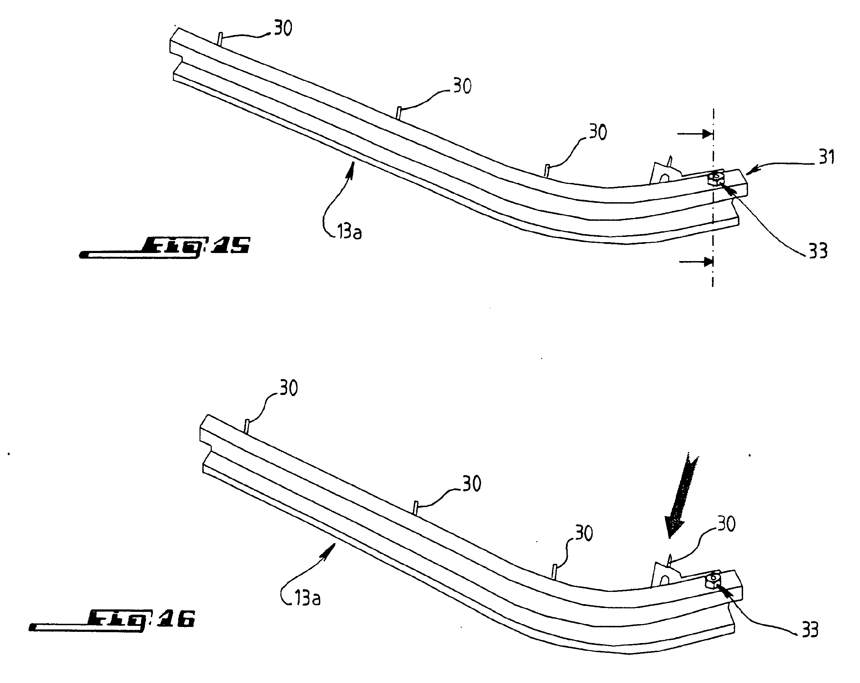

- la figure 15 représente une cinquième étape de ce procédé, par laquelle la position de l'extrémité du rail est ajustée,
- la figure 16 représente une sixième et dernière étape du procédé selon l'invention.

Conformément aux figures 10 à 16, le procédé selon l'invention consiste en une « *mise au pratique adaptée* » des éléments de coulissement et de maintien d'un ouvrant dans une position de fermeture d'un encadrement.

Le concept classique de « *mise au pratique* » consiste à fixer un ensemble d'éléments à l'exception de l'un d'entre eux, la position de cet élément non fixé, étant réglée et ajustée en fonction de la position des autres éléments.

Selon l'invention, ce concept a été adapté aux éléments de coulissement 11a, 12a, 13a, 11b, 12b, 13b (ces références étant notées dans ce qui suit « 11a-13b ») et de maintien de l'ouvrant dans sa position de fermeture 6a, 7a, 8a, 6b, 7b, 8b (ces références étant notées dans ce qui suit « 6a-8b ») pour réduire les écarts géométriques entre un couple chariot/rail et le couple centreur/guide correspondant.

L'adaptation de ce concept aux couples chariot/rail 11a-13b et centreur/guide correspondant 6a-8b est rendue nécessaire pour assurer une bonne continuité du mouvement de l'ouvrant depuis sa position de fermeture avec jeu mécanique faible jusqu'à sa position de coulissement avec jeu mécanique non nul et tenir compte de la déformation du chariot 13b sous le poids de l'ouvrant latéral coulissant 1.

En effet, dans la position de coulissement, le galet du chariot est au contact de la bande de roulement du rail mais dans la position de fermeture, comme l'ouvrant est maintenu par les couples centreurs/guide, et non plus par les couples chariot/rail, il est possible que ce galet ne soit pas au contact de la bande de roulement du rail.

Ainsi, lors de l'ouverture de l'ouvrant depuis sa position de fermeture, il est possible qu'il y ait un à coup, provoqué par la venue du galet contre la bande de roulement du rail.

De plus, dans la position de coulissement, le chariot se déforme sous le poids de l'ouvrant mais dans la position de fermeture, comme l'ouvrant est maintenu par les couples centreurs/guide, le chariot n'est pas déformé.

Cette déformation du chariot 11b, 12b, 13b, est inévitable et est due au passage de la position de fermeture à une position d'ouverture, puisque lors de ce passage, il y a un transfert de masse de l'ouvrant 1 depuis les couples centreur/guide 6a-8b peu voire pas déformables, vers les couples chariot/rail 11a-13b dont au moins le chariot est déformable.

Il y a donc également une discontinuité dans la forme du chariot entre la position de fermeture et la position d'ouverture de l'ouvrant, susceptible de créer un à coup lors de l'ouverture de l'ouvrant.

Si le concept classique de mise au pratique était appliqué au rail inférieur 13a, c'est-à-dire si le rail était positionné sur la caisse du véhicule après la fixation du couple centreur/guide inférieur 8a, 8a et celle du chariot 13b sur l'ouvrant, puis fixé dans une position dépendant uniquement de celle des autres éléments, le résultat obtenu ne serait pas satisfaisant.

Plus précisément, si le rail de guidage était positionné par rapport au centreur dont la fonction est de diminuer voire annuler tout jeu mécanique entre l'ouvrant et la caisse du véhicule, le jeu fonctionnel nécessaire pour le coulissement de l'ouvrant vers sa position d'ouverture, entre le chariot inférieur 13b et le rail inférieur 13a ne serait pas forcément assuré.

Et même s'il l'était, la position du rail à partir de celle du centreur ne prendrait pas en compte la déformation du chariot 13b due au poids de l'ouvrant lors de son coulissement.

Il a donc été nécessaire d'adapter le procédé de mise en pratique pour remplir les exigences de jeu mécanique et de déformation du chariot propres aux ouvrants latéraux, mus avec jeu mécanique par des éléments de coulissement 11a-13b, et maintenus avec un jeu mécanique très faible par des éléments de maintien 6a-8b.

Dans ce cadre, l'objectif recherché est de réduire les écarts fonctionnels entre le passage de la position de coulissement de l'ouvrant à la position de fermeture, soit de mieux positionner l'extrémité avant d'un rail de guidage par rapport au couple centreur/guide lorsque le centreur est engagé dans le guide.

Le procédé selon l'invention permet justement de mettre au contact le galet du chariot et la bande de roulement du rail dans la position de fermeture de l'ouvrant, ainsi que de rattraper les déformations de pièce d'un couple chariot/rail assurant le coulissement de l'ouvrant le long de la caisse du véhicule.

Pour ce faire, le procédé de l'invention consiste lorsqu'il est appliqué aux éléments inférieurs de coulissement et de maintien, et particulièrement au rail de guidage qui présente de par sa longueur, une certaine aptitude à être déformé, à monter l'ouvrant 1 à sa position de fermeture, les centreurs 6a, 7a, 8a étant engagés dans les guides associés 6b, 7b, 8b, le rail inférieur 13a n'étant que partiellement fixé sur la caisse 3 du véhicule, son extrémité 31 la plus proche du couple centreur/guide inférieur 8a, 8b étant libre d'être déplacée à une position ajustée, à déplacer l'extrémité libre 31 du rail inférieur 13a à la position ajustée et à fixer cette extrémité 31 de rail 13a dans sa position ajustée.

A cette position ajustée, l'extrémité 31 du rail 13a autorise le contact entre la bande de roulement de la roue du chariot et la paroi interne inférieure 32 du rail 13a de façon à minimiser le jeu mécanique existant entre le chariot et le rail.

En outre, à cette position ajustée, l'extrémité du rail du fait de son déplacement, a déformé le chariot inférieur 13b comme il l'est lorsque l'ouvrant 1 coulisse le long du rail associé 13a.

Ainsi, au moment même de l'ouverture de l'ouvrant 1, la bande de roulement de la roue du chariot 13b est déjà positionnée contre le rail 13a et le chariot 13b est déjà déformé à la façon selon laquelle il coulisse le long du rail 13a.

De la sorte, le passage de l'ouvrant 1 depuis la position de fermeture jusqu'à une position d'ouverture est effectué sans à coups ni discontinuité.

Comme l'illustre la figure 12, la fixation partielle du rail 13a à la caisse 3 du véhicule consiste à ne fixer que trois des quatre vis nécessaires à une fixation complète 30.

La dernière vis n'est mise en place qu'après l'amenée de l'extrémité avant 31 du rail 13a à sa position ajustée par un système de déplacement prévu par l'invention.

La distance de déplacement de l'extrémité avant du rail par le système de déplacement pourra être préalablement déterminée en fonction des propriétés mécaniques du chariot et du poids de l'ouvrant et/ou en fonction de calcul d'effort corrélés par des essais physiques.

Selon un premier mode de réalisation du système de déplacement 33 de l'extrémité avant du rail, tel qu'illustré sur la figure 7, ce système est de type vis-écrou.

Plus précisément, selon ce mode de réalisation, le rail inférieur 13a est logé au sein d'un profilé formant boitier d'accueil solidaire du coté de caisse du véhicule 36 à section en forme de C dont les parois supérieure 37, inférieure 38 et centrale 39 longent les parois homologues 41, 32, 42 du rail 13a, l'ouverture 43 du rail 13a destinée à accueillir la ou les roues du chariot coïncidant avec l'ouverture 44 du boitier solidaire du coté de caisse 36.

Un écrou 46 est soudé ou serti à l'extrémité avant 31 du rail de guidage inférieur 13a, sur la face externe de la paroi supérieure 41 de ce rail 13a et deux orifices de passage sont réalisés au niveau de l'écrou 46, respectivement sur les deux parois supérieures 37, et 41 du boîtier 36 et du rail 13a.

Une vis 47 est engagée depuis la face externe 37 du boitier 36 dans l'orifice formé dans le boitier, l'écrou sous-jacent 46 et la paroi supérieure 41 du rail 13a.

Le système écrou-vis permet ainsi un déplacement sensiblement vertical de l'extrémité avant 31 du rail inférieur 13a par rapport au boitier fixe solidaire du coté de caisse 36 jusqu'à la position ajustée par vissage de la vis 47 dans l'écrou 46.

L'effort appliqué par le système vis-écrou, est maîtrisé, pour permettre d'ajuster la position de l'extrémité avant du rail 13a pour que le galet du chariot 13b soit au contact de la bande de roulement du rail 13a lorsque le guide 8a est engagé dans le centreur 8b et de déformer suffisamment le chariot 13b engagé dans le rail 13a pour qu'il occupe la même position que lorsqu'il supporte l'ouvrant durant son coulissement.

Selon le deuxième mode de réalisation illustré sur la figure 8, le système de déplacement 33 de l'extrémité avant 31 du rail 13a utilise l'amplitude de déplacement vertical d'un vérin 51 monté sur un outil spécifique 52 et dont la partie mobile est disposée sous l'extrémité avant du rail. L'outil spécifique 52 est mis en appui sur une partie sensiblement horizontale de la caisse du véhicule, et robuste tel qu'un plancher 53 et le vérin est actionné dans le sens d'élévation de son extrémité supérieure 54 jusqu'à la venue de cette extrémité 54 contre la paroi inférieure 32 du rail de guidage 13a.

Tout comme le système vis-écrou, cette solution permet d'appliquer un effort constant pour amener l'extrémité du rail à sa position ajustée qui ne dépend que du choix du vérin et de la pression à l'entrée de ce dernier. Ceci est d'une grande importance, car la position ajustée du rail de guidage peut changer d'un véhicule à l'autre (car il prend en compte les écarts géométriques des pièces et des assemblages).

Selon le troisième mode de réalisation représenté sur la figure 9, c'est un ressort 56 qui est monté sur l'outil spécifique 52 à la place du vérin 51.

Etant donné que l'effort d'un ressort suit la formule suivante : *F*=*k*×|*l-l*₀| avec F la force, k le coefficient de compressibilité du ressort, l la longueur du ressort en charge, et l₀ la longueur à vide du ressort, l et l₀ étant illustrées sur la figure 9, cet effort varie en fonction de la variable l.

On peut réécrire la formule ainsi : *F*=|*k.*l-*k*.*l*₀| dans laquelle le premier terme est l'élément variable et le second une constante. La longueur l à laquelle le ressort place l'extrémité avant du rail à sa position ajustée dépend du jeu mécanique à rattraper entre le chariot et le rail au moment où l'ouvrant est monté à sa position de fermeture et varie donc d'un véhicule à l'autre.

Pour obtenir un effort le plus constant possible, il faut donc minimiser la valeur du coefficient k, ce qui peut entraîner l'utilisation de ressorts plus fragiles et moins résistants en endurance.

Inversement, pour avoir un effort moyen donné, et dans la mesure où le facteur k est choisi petit, la longueur la doit être assez grande, ce qui va exiger un encombrement non négligeable de l'outil.

On donne le détail dans ce qui suit du procédé selon l'invention, qui est valable avec l'un ou l'autre des systèmes de déplacement des figures 7 à 9 :

Conformément à la figure 10, on fixe sur le côté de caisse, alors que l'ouvrant 1 n'est pas monté sur celle-ci, le rail de guidage supérieur 11a et le rail central 12a avec l'ensemble des vis de fixation (quatre ou plus), ainsi que les centreurs supérieur 6a, central 7a inférieur 8a et le fil de gâche 61.

Le rail inférieur 13a n'est fixé que partiellement c'est-à-dire que, comme le montre la figure 12, seules les trois vis arrière 30 situées sur la partie rectiligne sont mises en place et vissées sur la caisse, la quatrième vis, en vis à vis du couple centreur/guide inférieur n'étant pas montée.

La taille de la pièce et la légère souplesse des pièces de tôlerie qui composent l'ossature de la caisse permettent une déformation de l'extrémité non fixée du rail en dehors de la ligne définie par la partie rectiligne du rail, suffisante pour déplacer, par effet de bras de levier, la partie avant de ce rail dans la direction d'ajustement, verticale dans les exemples présentés.

On fixe également les chariots 11b, 12b, 13b et les guides 6b, 7b, 8b sur l'ouvrant 1, selon la figure 11.

Conformément à la figure 13, l'ouvrant 1 est monté sur la caisse par engagement des chariots dans les rails correspondants.

On ferme ensuite l'ouvrant latéral 1 relativement à la caisse, de sorte que les centreurs s'engagent dans leur guide et maintiennent l'ouvrant sans jeu mécanique relativement à la caisse du véhicule, selon la figure 14.

Selon la figure 15, on utilise ensuite le système de déplacement 33 pour faire venir l'extrémité avant non fixée du rail à sa position ajustée.

On visse enfin la dernière vis de fixation 30 du rail de guidage inférieur 13a pour fixer l'extrémité avant 31 de ce rail dans sa position ajustée.

L'invention telle que décrite ci-dessus présente différents avantages parmi lesquels :
- la diminution des exigences géométriques sur tous les éléments servant au maintien de l'ouvrant dans la position de fermeture ou au coulissement de l'ouvrant, du fait de l'utilisation du procédé de mise au pratique adapté qui ne requiert que l'ajustement d'une pièce (le rail inférieur),
- la suppression des effets néfastes et des contraintes induites par les variations de position des éléments supportant l'ouvrant,
- la réduction conséquente des coûts de fabrication, de contrôles et de retouche des pièces,
- la prise en compte précise des jeux mécaniques fonctionnels nécessaires au coulissement de l'ouvrant et la déformation du chariot dans la position de fermeture de l'ouvrant proche ou identique à la déformation de ce chariot due au coulissement de l'ouvrant, permettant d'assurer une continuité du maintien de l'ouvrant depuis sa position de fermeture jusqu'à une position d'ouverture,
- la modification faible d'un dispositif existant de maintien d'un ouvrant, dans le premier mode de réalisation de l'invention, puisque seul un système vis-écrou est ajouté à l'extrémité avant du rail et l'absence totale de modification dans le cas des deux autres modes de réalisation à ressort ou vérin,
- la réduction du nombre de défaut de manoeuvre de la porte, d'esthétique, d'endurance et de bruyance.
- l'utilisation directe de l'énergie pneumatique accessible à proximité de la plupart des lignes d'assemblage industrielles,
- la possibilité de rattraper des déformations assez faibles grâce à des visseuses industrielles, acceptant des faibles couples de serrage.
- le système de déplacement de type vis-écrou, permet une simplicité de mise en place, un fonctionnement avec des charges et des efforts importants, un choix vaste de pièces déjà existantes. Concernant les visseuses utilisées, celles-ci présentent une large gamme de couple et proposent même aujourd'hui des couples de serrage réduits, permettant ainsi d'agrandir le champs d'application de cette solution.

Il est bien évident que ce procédé est applicable à bien d'autres cas de figure : dans tout assemblage mécanique, la position des pièces entre elles revêt une importance particulière.

L'invention permet donc d'améliorer la position de pièces entre elles dans le cadre d'un assemblage de système complexe en taille ou en nombre d'élément dans un contexte de cadence élevé de montage.

## Revendications

1. Procédé de montage d'un ouvrant coulissant apte à obturer un encadrement, permettant d'ajuster les positions relatives des éléments de coulissement de l'ouvrant et des éléments de liaison de l'ouvrant dans une position de fermeture de l'encadrement, les éléments de coulissement comprenant un rail et un chariot associé avec lesquels l'ouvrant coulisse avec un jeu mécanique non nul, les éléments de liaison de l'ouvrant maintenant l'ouvrant en position de fermeture avec un jeu mécanique faible, **caractérisé en ce qu'**il comprend au moins les étapes de :
- fixation partielle d'au moins un des éléments de coulissement (13a), une partie de cet élément pouvant se mouvoir jusqu'à une position ajustée,
- fixation complète des autres éléments (11a, 11b, 12a, 12b, 13b, 6a, 6b, 7a, 7b, 8a, 8b),
- montage de l'ouvrant (1) sur la caisse du véhicule à sa position de fermeture, par l'élément partiellement fixé (13a) et les éléments complètement fixés (11a, 11b, 12a, 12b, 13b, 6a, 6b, 7a, 7b, 8a, 8b), le chariot (13b) étant engagé dans le rail (13a),
- déplacement de la partie mobile de l'élément partiellement fixé jusqu'à la position ajustée,
- fixation de la partie mobile (31) de l'élément partiellement fixé (13a) dans la position ajustée.

2. Procédé selon la revendication 1, **caractérisé en ce que** l'élément partiellement fixé est le rail de coulissement (13a) de l'ouvrant dont l'extrémité (31) la plus proche du guide associé (8b) est la partie pouvant se mouvoir à la position ajustée.

3. Procédé selon la revendication 2, **caractérisé en ce que** l'élément partiellement fixé est un rail inférieur de coulissement (13a) de l'ouvrant (1).

4. Procédé selon la revendication 2 ou 3, **caractérisé en ce que** le déplacement de l'extrémité mobile (31) du rail (13a) est effectué par rapprochement ou éloignement de cette extrémité (31) relativement à un élément solidaire de l'encadrement (3).

5. Procédé selon la revendication 4, **caractérisé en ce que** le déplacement de la partie mobile (31) à la position ajustée est effectué au moyen d'un système vis-écrou (46, 47), l'écrou (46) étant solidaire de l'extrémité (31) du rail (13a) et la vis (47) traversant le boîtier (36), l'extrémité (31) du rail et l'écrou (46).

6. Procédé selon la revendication 2 ou 3, **caractérisé en ce que** le déplacement de l'extrémité mobile (31) du rail (13a) est effectué au moyen d'un outil spécifique (52) pourvu d'une partie (51, 54, 56) mobile sur le chemin de déplacement de l'extrémité mobile (31) du rail jusqu'à la position ajustée, l'outil spécifique (52) étant dégagé de son emplacement une fois l'extrémité mobile fixée à sa position ajustée.

7. Procédé selon la revendication 6, **caractérisé en ce que** l'outil spécifique (52) est muni d'un organe élastique tel qu'un ressort (56) apte à être interposé entre l'extrémité mobile du rail et une partie fixe (53) du véhicule telle que le plancher.

8. Procédé selon la revendication 7, **caractérisé en ce que** l'outil spécifique (52) est muni d'un vérin (51, 54) apte à être interposé entre l'extrémité mobile du rail et une partie fixe (53) du véhicule telle que le plancher.

9. Dispositif d'ajustement en position d'un élément de coulissement d'un ouvrant apte à obturer un encadrement, l'ouvrant coulissant avec un jeu mécanique non nul au moyen d'éléments de coulissement comprenant un rail de guidage (13a) et un chariot associé (13b) qui supportent le poids de l'ouvrant durant son coulissement, le chariot (13b) étant déformable sous le poids de l'ouvrant, et étant lié à l'encadrement dans la position de fermeture, sans jeu mécanique, par des éléments de liaison, le chariot n'étant alors pas forcément en appui contre la bande de roulement du rail, **caractérisé en ce qu'**il comprend :
- des moyens (30) de fixation partielle du rail à la caisse du véhicule, ces moyens étant aptes à maintenir une extrémité du rail (31) à une position non ajustée et laissant cette extrémité déplaçable jusqu'à une position ajustée, à laquelle, dans la position de fermeture de l'ouvrant, le chariot est en appui contre la bande de roulement du rail et le chariot est déformé comme il l'est lorsque l'ouvrant coulisse,
- un système de déplacement (33) de l'extrémité mobile (31) du rail depuis la position non ajustée jusqu'à la position ajustée,
- un moyen de fixation (30) de l'extrémité mobile du rail à la position ajustée.

10. Dispositif selon la revendication 9, comprenant un boîtier d'accueil (36) du rail destiné à être solidaire de l'encadrement, le système de déplacement (33) assurant un rapprochement ou un éloignement de l'extrémité mobile du rail relativement au boîtier.

11. Dispositif selon la revendication 10, dans lequel le système de déplacement (33) est du type vis-écrou, l'écrou (46) étant solidaire de l'extrémité du rail et la vis (47) traversant le boîtier, l'extrémité du rail et l'écrou.

12. Dispositif selon la revendication 9, comprenant un outil spécifique (52) pourvu d'une partie mobile sur le chemin de déplacement de l'extrémité mobile entre la position non ajustée et la position ajustée, l'outil spécifique (52) étant apte à être dégagé de son emplacement une fois l'extrémité mobile (31) du rail (13a) fixée à sa position ajustée.

13. Dispositif selon la revendication 12, dans lequel l'outil spécifique (52) est muni d'un vérin ou d'un organe élastique tel qu'un ressort (56).

14. Dispositif selon l'une des revendications 9 à 13, **caractérisé en ce que** l'ouvrant est un ouvrant latéral d'un véhicule automobile et **en ce que** l'encadrement est un encadrement formé dans la caisse du véhicule.

## Claims

1. Method for installing a sliding door leaf able to fill a frame, making it possible to adjust the relative positions of the slide elements for the door leaf and the connection elements for the door leaf in a closed position of the frame, the slide elements comprising a rail and an associated carriage by means of which the door leaf slides with mechanical play which is not zero, the connection elements for the door leaf holding the door leaf in the closed position with low mechanical play, **characterised in that** said method comprises at least the following steps:
- partial fixation of at least one of the slide elements (13a), a part of this element being able to move into an adjusted position,
- complete fixation of the other elements (11a, 11b, 12a, 12b, 13b, 6a, 6b, 7a, 7b, 8a, 8b),
- mounting of the door leaf (1) on the vehicle body in its closed position by the partly fixed element (13a) and the completely fixed elements (11a, 11b, 12a, 12b, 13b, 6a, 6b, 7a, 7b, 8a, 8b), the carriage (13b) being engaged in the rail (13a),
- displacement of the movable part of the partly fixed element into the adjusted position,
- fixation of the movable part (31) of the partly fixed element (13a) in the adjusted position.

2. Method according to claim 1, **characterised in that** the partly fixed element is the slide rail (13a) of the door leaf, of which the end (31) closest to the associated guide (8b) is the part able to move into the adjusted position.

3. Method according to claim 2, **characterised in that** the partly fixed element is a lower slide rail (13a) of the door leaf (1).

4. Method according to either claim 2 or claim 3, **characterised in that** the movable end (31) of the rail (13a) is displaced by bringing said end (31) towards, or distancing it from an element attached to the frame (3).

5. Method according to claim 4, **characterised in that** the movable part (31) is displaced into the adjusted position by means of a bolt-nut system (46, 47), the nut (46) being attached to the end (31) of the rail (13a) and the bolt (47) passing through the housing (36), the end (31) of the rail and the nut (46).

6. Method according to either claim 2 or claim 3, **characterised in that** the movable end (31) of the rail (13a) is displaced by means of a specific tool (52) provided with a part (51, 54, 56) which is movable over the path of displacement of the movable end (31) of the rail as far as the adjusted position, the specific tool (52) being freed from its position once the movable end is fixed in its adjusted position.

7. Method according to claim 6, **characterised in that** the specific tool (52) is provided with a resilient member such as a spring (56) which can be positioned between the movable end of the rail and a fixed part (53) of the vehicle, such as the floor.

8. Method according to claim 7, **characterised in that** the specific tool (52) is equipped with an actuating cylinder (51, 54) which can be positioned between the movable end of the rail and a fixed part (53) of the vehicle, such as the floor.

9. Device for positional adjustment of a slide element for a door leaf able to fill a frame, the door leaf sliding with mechanical play which is not zero by means of slide elements comprising a guide rail (13a) and an associated carriage (13b) which support the weight of the door leaf during the sliding thereof, the carriage (13b) being deformable under the weight of the door leaf, and being connected to the frame in the closed position, with no mechanical play, by connection elements, the carriage thus not necessarily resting against the running surface of the rail, **characterised in that** said device comprises:
- means (30) for partial fixing of the rail to the vehicle body, said means being able to hold one end of the rail (31) in an unadjusted position and allowing the displacement of said end into an adjusted position, in which, in the closed position of the door leaf, the carriage rests against the running surface of the rail and the carriage is deformed similarly to when the door leaf slides,
- a system (33) for displacement of the movable end (31) of the rail from the unadjusted position into the adjusted position,
- a means (30) for fixing the movable end of the rail in the adjusted position.

10. Device according to claim 9, comprising a housing (36) for receiving the rail intended to be attached to the frame, the displacement system (33) ensuring that the movable end of the rail can be brought towards, or distanced from the housing.

11. Device according to claim 10, wherein the displacement system (33) is of the bolt-nut type, the nut (46) being attached to the end of the rail and the bolt (47) passing through the housing, the end of the rail and the nut.

12. Device according to claim 9, comprising a specific tool (52) provided with a part which is movable over the path of displacement of the movable end between the unadjusted position and the adjusted position, the specific tool (52) being able to be freed from its position once the movable end (31) of the rail (13a) is fixed in its adjusted position.

13. Device according to claim 12, wherein the specific tool (52) is equipped with an actuating cylinder or a resilient member such as a spring (56).

14. Device according to any one of claims 9 to 13, **characterised in that** the door leaf is a side door leaf of a motor vehicle, and **in that** the frame is a frame formed in the vehicle body.

## Patentansprüche

1. Verfahren zur Montage einer Schiebetüre, die in der Lage ist, einen Rahmen zu verschließen, mit der Möglichkeit, die jeweiligen Positionen der Gleitelemente der Türe zueinander und der Verbindungselemente der Türe in einer Schließposition des Rahmens anzupassen, wobei die Gleitelemente eine Schiene und einen zugehörigen Schlitten umfassen, anhand derer die Türe mit einem mechanischen Spiel ungleich Null gleitet, und die Verbindungselemente der Türe die Türe mit einem geringen mechanischen Spiel in der Schließposition halten, **dadurch gekennzeichnet, dass** es zumindest die folgenden Schritte umfasst:
- die teilweise Befestigung zumindest eines der Gleitelemente (13a), wobei sich ein Teil dieses Elements bis zu einer eingepassten Stellung bewegen kann,
- die vollständige Befestigung der anderen Elemente (11a, 11b, 12a, 12b, 13b, 6a, 6b, 7a, 7b, 8a, 8b),
- die Montage der Türe (1) in ihrer geschlossenen Stellung an der Fahrzeugkarosserie, durch das teilweise befestigte Element (13a) und die vollständig befestigten Elemente (11a, 11b, 12a, 12b, 13b, 6a, 6b, 7a, 7b, 8a, 8b), wobei der Schlitten (13b) in die Schiene (13a) eingeführt ist,
- die Bewegung des beweglichen Abschnitts des teilweise befestigten Elements bis in die eingepasste Stellung,
- die Befestigung des beweglichen Abschnitts (31) des teilweise befestigten Elements (13a) in der eingepassten Stellung.

2. Verfahren nach Anspruch 1, **dadurch gekennzeichnet, dass** das teilweise befestigte Element die Gleitschiene (13a) der Türe ist, deren Ende (31), das der zugeordneten Führung (8b) am nächsten liegt, jener Abschnitt ist, der sich bis zur eingepassten Stellung bewegen kann.

3. Verfahren nach Anspruch 2, **dadurch gekennzeichnet, dass** das teilweise befestigte Element eine untere Gleitschiene (13a) der Türe (1) ist.

4. Verfahren nach Anspruch 2 oder 3, **dadurch gekennzeichnet, dass** die Bewegung des beweglichen Endes (31) der Schiene (13a) durch Annäherung oder Entfernung dieses Endes (31) in Bezug zu einem Element erfolgt, das fest mit dem Rahmen (3) verbunden ist.

5. Verfahren nach Anspruch 4, **dadurch gekennzeichnet, dass** die Bewegung des beweglichen Endes (31) in die eingepasste Stellung durch ein Schrauben-Muttern-System (46, 47) erfolgt, wobei die Mutter (46) fest mit dem Ende (31) der Schiene (13a) verbunden ist, und die Schraube (47) durch das Gehäuse (36), das Ende (31) der Schiene und die Mutter (46) führt.

6. Verfahren nach Anspruch 2 oder 3, **dadurch gekennzeichnet, dass** die Bewegung des beweglichen Endes (31) der Schiene (13a) anhand einer Sondervorrichtung (52) erfolgt, die mit einem beweglichen Abschnitt (51, 54, 56) auf dem Verfahrweg des beweglichen Endes (31) der Schiene bis zur eingepassten Stellung versehen ist, wobei die Sondervorrichtung (52) aus ihrer Einbaustelle herausgezogen wird, sobald das bewegliche Ende in der eingepassten Stellung befestigt ist.

7. Verfahren nach Anspruch 6, **dadurch gekennzeichnet, dass** die Sondervorrichtung (52) mit einem elastischen Organ, wie einer Feder (56) versehen ist, die zwischen das bewegliche Ende der Schiene und einen festen Abschnitt (53) des Fahrzeugs, wie den Boden, eingesetzt werden kann.

8. Verfahren nach Anspruch 7, **dadurch gekennzeichnet, dass** die Sondervorrichtung (52) mit einem Zylinder (51, 54) versehen ist, der zwischen das bewegliche Ende der Schiene und einen festen Abschnitt (53) des Fahrzeugs, wie den Boden, eingesetzt werden kann.

9. Vorrichtung zur Stellungseinpassung eines Gleitelements einer Türe, die in der Lage ist, einen Rahmen zu verschließen, wobei die Türe mit einem mechanischen Spiel ungleich Null mit Gleitelementen gleitet, die eine Führungsschiene (13a) und einen zugehörigen Schlitten (13b) umfassen, die während der Gleitbewegung das Gewicht der Türe halten, wobei der Schlitten (13b) unter dem Gewicht der Türe verformbar, und in der geschlossenen Position ohne mechanisches Spiel durch Verbindungselemente mit dem Rahmen verbunden ist, und der Schlitten demnach nicht unbedingt an der Lauffläche der Schiene anliegt, **dadurch gekennzeichnet, dass** sie folgendes umfasst:
- Vorrichtungen (30) zur Teilbefestigung der Schiene an der Fahrzeugkarosserie, wobei diese Vorrichtungen in der Lage sind, ein Ende der Schiene (31) in einer nicht eingepassten Stellung festzuhalten, und dieses Ende bis zu einer eingepassten Stellung verfahrbar lassen, in der der Schlitten in der Schließposition der Türe an der Lauffläche der Schiene anliegt, und der Schlitten so verformt wird, wie er es ist, wenn die Türe gleitet,
- ein System zum Verfahren (33) des beweglichen Endes (31) der Schiene von der nicht eingepassten Stellung bis zur eingepassten Stellung,
- eine Vorrichtung zum Befestigen (30) des beweglichen Endes der Schiene in der eingepassten Stellung.

10. Vorrichtung nach Anspruch 9, umfassend ein Aufnahmegehäuse (36) der Schiene, das dazu bestimmt ist, fest mit dem Rahmen verbunden zu sein, wobei das System zum Verfahren (33) für eine Annäherung oder eine Entfernung des beweglichen Endes der Schiene in Bezug zum Gehäuse sorgt.

11. Vorrichtung nach Anspruch 10, bei dem das System zum Verfahren (33) ein System des Typs Schraube-Mutter ist, wobei die Mutter (46) fest mit dem Ende der Schiene verbunden ist, und die Schraube (47) durch das Gehäuse, das Ende der Schiene und die Mutter führt.

12. Vorrichtung nach Anspruch 9, umfassend eine Sondervorrichtung (52), die mit einem beweglichen Abschnitt auf dem Verfahrweg des beweglichen Endes zwischen der nicht eingepassten Stellung und der eingepassten Stellung versehen ist, wobei die Sondervorrichtung (52) aus seiner Einbaustelle herausgezogen werden kann, sobald das bewegliche Ende (31) der Schiene (13a) in seiner eingepassten Stellung befestigt ist.

13. Vorrichtung nach Anspruch 12, bei dem die Sondervorrichtung (52) mit einem Zylinder oder einem elastischen Organ, wie einer Feder (56) versehen ist.

14. Vorrichtung nach einem der Ansprüche 9 bis 13, **dadurch gekennzeichnet, dass** die Türe eine Seitentüre eines Kraftfahrzeugs ist, und **dadurch**, dass der Rahmen ein Rahmen ist, der in eine Fahrzeugkarosserie eingearbeitet ist.
